# EUROPEAN PATENT APPLICATION

(11) **EP 3 202 554 A1**
(43) Date of publication of application: **09.08.2017**
(21) Application number: 16020491.3
(22) Date of filing: 12.12.2016
(51) Int. Cl.: B29C 65/02, B29C 65/10, E01C 13/04, E01F 9/512, E04F 15/10, B29L 31/10, B29L 31/52, B29L 7/00, B29K 101/12

(54) **PRE-ASSEMBLED THERMOPLASTIC MARKINGS**

(30) Priority: 26.01.2016 EP 16000175
(71) Applicant: SC Metalbac&Farbe S.A., 607305 Bacau (RO)
(72) Inventor: HANDARIC, Andrei-Ciprian, 600365, Bacau (RO)

(57) **Abstract**

The invention subject of our request is related to the method that we have developed in order to obtain pre-assembled thermoplastic markings, called FAST-FORM. This method is meant to simplify the final work of installation/application of the markings.

Basically, all the separate pieces contained by an initial drawing will be gathered in sub-assemblies. Once a sub-assembly is formed, it will be molten in order to form a single piece. By this method, instead of having a giant puzzle of a drawing that contains, for instance, hundreds or tens of small pieces, we shall obtain the same puzzle made of just a few sub-assemblies.

## Description

### Invention:

This invention is about pre-assembled thermoplastic markings (further on called FAST-FORM) and methods and installations of their production, based on the use of commercially available thermoplastic preforms, heat developing mechanisms, such as microwave, infrared, gas-torch, electrical heat or hot air blowing and adhesion blocking substrates and surfaces.

### Introduction:

Thermoplastic Preforms are commonly used for a wide range of horizontal markings, such as traffic signs, playgrounds, commercials and decorative. They consist of a number of pre-manufactured pieces and will be delivered to the end user just in this form, as a giant puzzle. The puzzle will be put together at the work place in the correct form just in the moment when and where it is supposed to be applied. Any kind of heat stable surface, such as asphalt or concrete may be the foreseen substrate. After having put all pieces of the puzzle together, the whole material will be melted with a heat developing mechanism, such as microwave, infrared, gas-torch, electrical heat or hot air blowing. When molten, all pieces flow and stick together while a good adhesion to the substrate is given.

It is understood that the more pieces this puzzle does consist of, the more time is needed to assemble all together. This excludes the use of complicated symbols consisting of dozens of bigger and smaller pieces. Until everything is assembled a long time will have passed and additionally smaller parts may get lost.

Just here the following described invention jumps in and allows to pre-assemble even complicated puzzles and bond them together on the producers side without getting lost any kind of properties of traditional preforms; just preassembling the puzzle from many pieces to one piece by melting them together and have a FAST-FORM.

This means: FAST-FORM is just like a preform but all the pieces are already put together and do have a good adhesion to each other with no need of any assembling any more.

This pre-assembled thermoplastic Preform (FAST-FORM) can be simply put onto the surface of the substrate and be processed. For the applicator the assembling time is won and pieces do not get lost or break any more.

### Invention:

Job of the present invention is now to develop a method and a process of producing pre-assembled thermoplastic preform FAST-FORM, in an easy, fast and uncomplicated way. The FAST-FORM shall allow the applicator simply to put it on the foreseen surface and to start the application, without the necessity to assemble anything and without blocking roads, crossroads or any other kind of area for a longer time.

The purpose of the invention is solved considering the material and the process by in claim given back conditions and mechanisms. Other requirements and conditions are solved by claim 2-3 and the following description of the procedure.

Preforms are mostly produced from lager foils, which are cut into the desired puzzle-pieces with corresponding cutting machines, where mostly waterjet cutter, are in use. Regularly all pieces are packed together and delivered as they are. Preassembling does not help, as long as the pieces do not stick together. For achieving bondage between preassembled pieces, the following procedure allows to follow up and have a complete preform, which can be applied as it is. When simply melting the pieces on an unsuitable material as substrate using any kind heat developing mechanism, the pieces will stick together but will develop adhesion to the substrate and cannot be removed anymore. When using any adhesion blocking material as substrate, this problem is solved and the desired product is done.

### Methods and processing:

**Procedure**: Assembling the single pieces on the surface of the substrate and melt the pieces together. Followed by removing the now "One Piece" - the FAST-FORM-from the substrate, pack and deliver it.

**Melting process:** Slight melting of pre-assembled single, not yet bound together pieces; with a heat developing mechanism in a way that preferably the surface of the single pieces gets molten while the material has the possibility to flow together, will develop bondage between the single pieces in order to get one big piece.

For heat developing mechanisms may be used any kind of gas-torch, gas flame, infrared heater, microwave, and electrical heater and laser-light, while the developed heat only must arrive on the surface of the thermoplastic material and must be able to melt the material. Temperatures from 130°C to 220° C must be given, while the preferred temperature is about 160° C. The time of heat exposal must be hereby under control.

**Substrate**: A substrate which avoids any adhesion of thermoplastic materials on its surface, allows to melt the single pieces together on its surface and to come from a puzzle to a FAST-FORM, which after having cooled down can be easily taken of, packed and delivered.

As an adhesion blocking substrate may serve to minus degrees under-cooled metal or stone surfaces. As long as the cooling of metal or stone surfaces to negative degrees would be rather energy intensive this method works at low efficiency with high costs.

More preferable are Teflon treated tapes, foils or other solid materials. Even more preferable are silicon treated high temperature resistant tapes, foils or solid materials. While using tapes as adhesion blocking substrates the disadvantage is that their heat stability strictly has to be taken into consideration. Too much heat would destroy the tape. Gas, laser and flame heating should be excluded in order to avoid tape damages. Further the limited width (may be long but not wide) is disadvantageous. Advantage of using tape or foil is their low weight by giving the choice to use the tapes on a forward moving belt which moves below the installed heat developer. In the end of the belt the together-molten graph "the FAST-FORM" may be taken off from the belt. Herby symbol size and belt size have to correspond. Alternatively the tape is installed fixed and the heater moves slowly along the tape.

As most preferable, is considered a mineral surface, such as granite, special concrete, or other mineral surface's, which are able to incorporate water in their poor's and channels.
When using a mineral surface, such as granite or concrete, the surface simply needs wetting with clear water. A part of the water penetrates in the mineral while a thin film remains on the surface. The puzzle than can be assembled on the wet mineral surface followed by slight heating by melting the surface of the material, so that it flows together and the puzzle becomes a FAST-FORM. Due to the strong adhesion blocking effect of water the FAST-FORM has no adhesion to the substrate and can be easily removed. Advantageous using this solution for the process is first the complete heat and flame resistance of the substrate and further the free choice of size. Disadvantageous of course is the higher weight. Last not least this represents the fastest and less cost intensive method. When the puzzle consist of more smaller pieces and there are various melting tables with various sizes installed, people do have all the time they need to assemble the pieces before processing with heat.

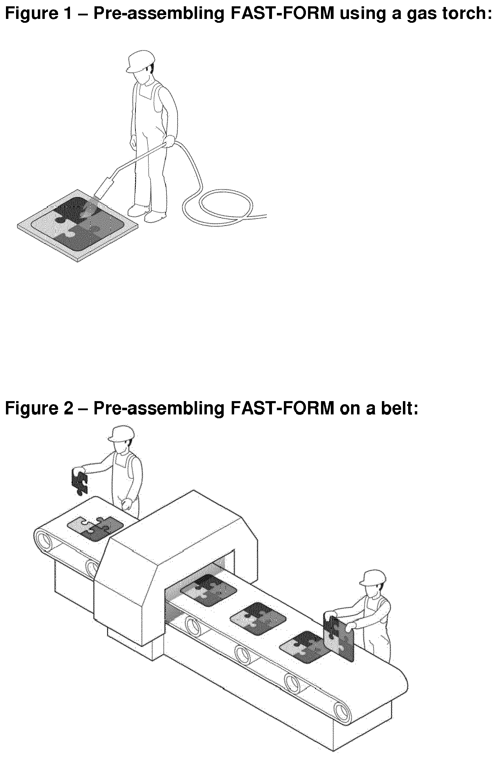

## Claims

1. Pre-assembled thermoplastic preformed puzzles, where the particular single pieces are molten together, while being assembled, by using for the melting process a heat developing mechanism and, as a substrate, an adhesion blocking material composition, with a production procedure like assembling the puzzle pieces on the adhesion blocking substrate to the desired final graph followed by subsequent melting the surface of the single pieces to allow the material to flow together and to get a bondage between the single pieces but not having any adhesion to the substrate and having the possibility to remove the complete bond together puzzle in one piece independently of the number, size, color and form of the former single puzzle pieces.

2. Following the claim 1 for Pre-assembled thermoplastic preformed puzzles where for their production during melting the single pieces to one piece a heat developing mechanism such as:
a. Any kind of gas-torch or gas flame;
b. Infrared heater, microwave, electrical heater and laser-light or any combinations between these.

3. Following the claims 1 and 2 for Pre-assembled thermoplastic preformed puzzles, where for their production while melting the single pieces to one piece, an adhesion blocking material such as to minus degrees under-cooled metal or stone surfaces, Teflon treated tapes, foils or other solid materials, silicon treated high temperature resistant tapes or foils, or mineral surfaces, such as granite, special concrete, or other mineral surface's, which are able to incorporate water in their poor's and channels, are used as substrate.
